# EUROPEAN PATENT SPECIFICATION

(11) **EP 0 437 941 B1**
(45) Date of publication and mention of the grant of the patent: **09.08.1995**
(21) Application number: 90313436.9
(22) Date of filing: 11.12.1990
(51) Int. Cl.: B01D 53/50, B01D 53/68

(54) **Fossil fuel flue gas scrubbing**
Wäsche von Rauchgasen, die von fossilen Brennstoffen stammen
Lavage de gaz de fumée à partir des combustibles fossiles

(30) Priority: 12.12.1989 US 450207
(43) Date of publication of application: 24.07.1991
(73) Proprietor: THE BABCOCK & WILCOX COMPANY, New Orleans, Louisiana 70160 (US)
(72) Inventor: Downs, William, Alliance, OH 44601 (US)
(74) Representative: Purvis, William Michael Cameron

(56) References cited:
- EP-A- 0 159 760
- EP-A- 0 244 346
- EP-A- 0 263 317
- DE-A- 3 011 592
- DE-A- 3 325 140
- GB-A- 2 154 468
- US-A- 4 231 995
- US-A- 4 251 236

## Description

The invention relates to scrubbing of flue gases of fossil fuel fired plant.

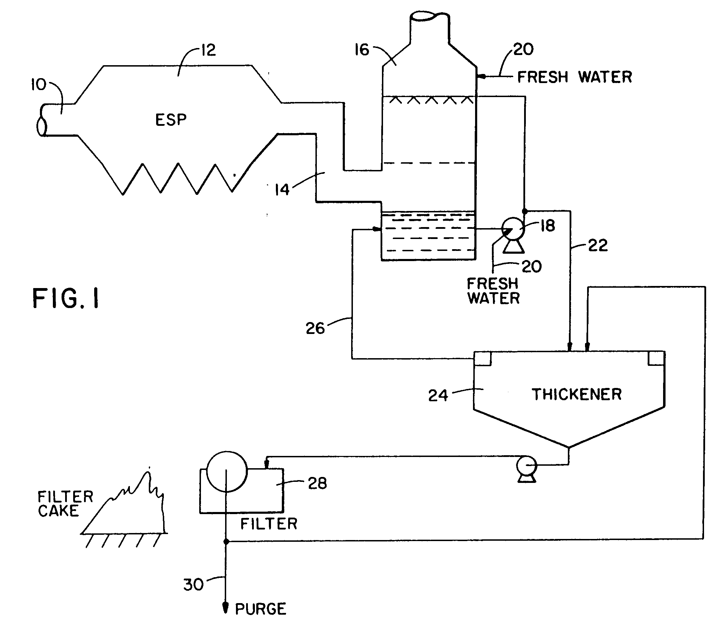

Historically, the water cycle of wet scrubbing processes used on fossil fuel fired boilers has operated in an open mode. This meant that water purge streams were used which served the purpose of removing soluble impurities from the process. The principal impurity of concern was calcium chloride. A simple schematic of an open cycle process is depicted in Figure 1 of the accompanying drawings.

In Figure 1, exhaust gases from a fossil fuel fired boiler (not shown) are supplied through an exhaust line 10 to an electrostatic precipitator (ESP) 12 where dust is removed from the flue gases and collected. The dust free gas is then supplied through a line 14 to an absorber 16 where lime or limestone slurry is sprayed into the gas by a recycling pump 18. Fresh make-up water is supplied through lines 20 both to the pump 18 and directly to the absorber 16. Some of the slurry is supplied through a line 22 to a thickener 24 which serves to concentrate solids from the slurry. A decanted stream with reduced solids is returned over a line 26 to the absorber 16. A high solids slurry from the thickener 24 is supplied to a filer 28 which removes a filter cake from the slurry. Some of the liquid is returned from the thickener 24 to the absorber and some is purged through an outlet 30.

One example of operation for the apparatus of Figure 1 services a 500 MW boiler with the flue gases having a 3% by weight sulphur content. The filter cake from the filter 28 has an 85% by weight solid content. Chlorine content in the coal firing the boiler is 800 ppm and chlorine content in the effluent water is 100 ppm. Forced oxidation is 100%.

The result of the operation yields chloride content in the recycled slurry of 10,000 ppm with a chloride content in the resulting dried gypsum of 1,740 ppm. The liquid was purged at a rate of 3.79 x 10.3m³/s (60 GPM) with a diminution factor (alpha) of about 1.0.

Since about 1980, open cycle operation has become less and less acceptable to both the operators of these processes and to environmentalists.

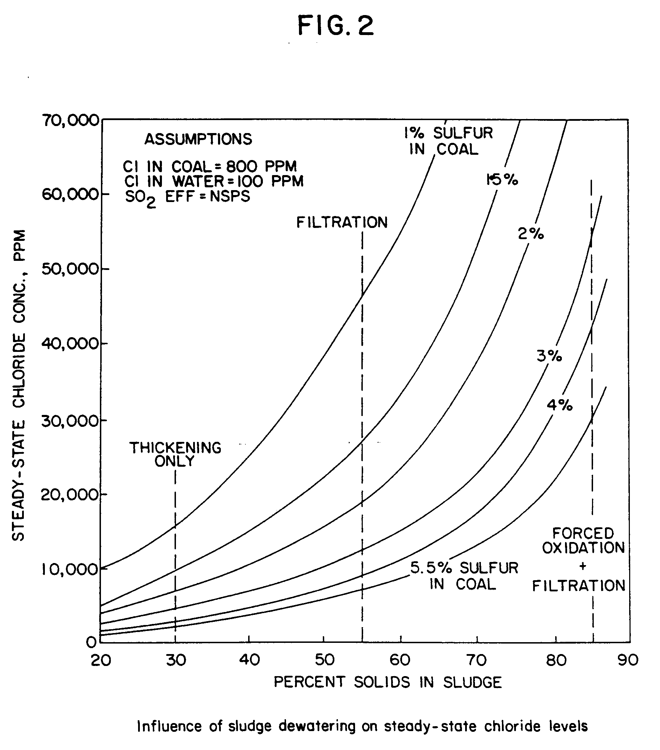

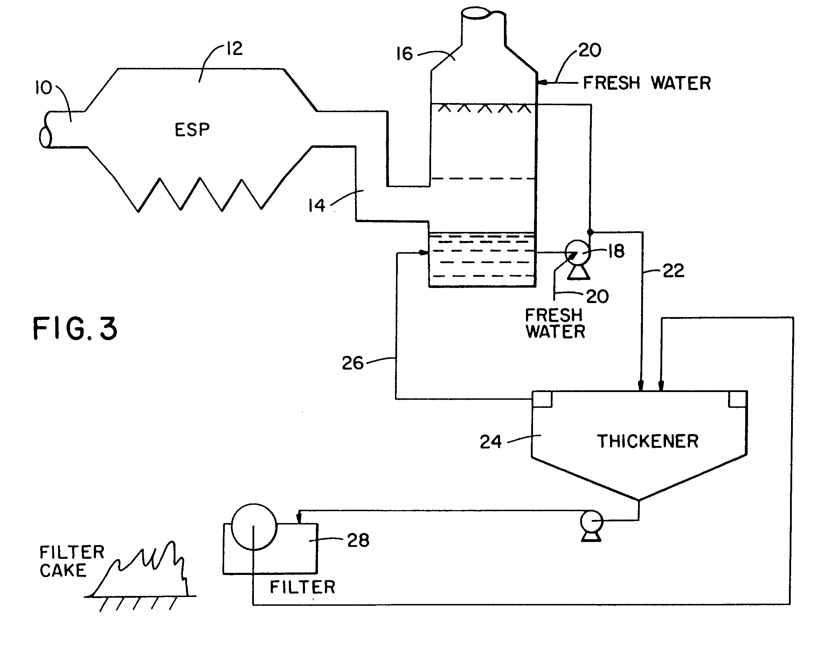

The alternative to open cycle operation is closed cycle operation. The intent of closed cycle operation is to limit or eliminate liquid effluents from the processes. The usual form that closed cycle operation takes is to allow no liquid effluent to leave except for the free water remaining in the filter (or centrifuge) cake. One consequence of operation in this mode is that the impurities become concentrated in the scrubbing liquid to very high concentrations. Figure 2 of the accompanying drawings is an example of the steady state concentration of chlorides which could build up in a closed cycle operating in the manner shown in Figure 3 of the accompanying drawings.

In Figure 3, where the same reference numerals are utilised to designate the same or similar parts, a process can operate with the same initial conditions as for the apparatus of Figure 1. This results in a recycle slurry having a 50,000 ppm chloride content and a dried gypsum chloride content of 9,500 ppm. The diminution factor is about 0.9.

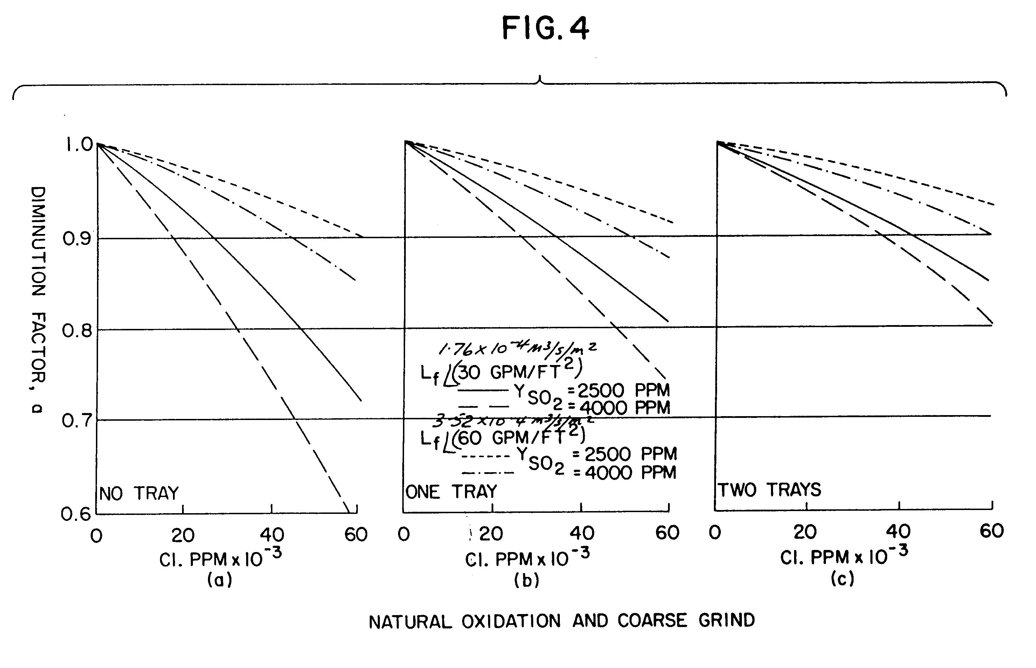

Two problems arise out of this method of closed cycle operation. First, the presence of high concentrations of chlorides in the scrubbing medium has a deleterious effect on SO₂ absorption in the scrubber. This fact is illustrated in Figure 4 of the accompanying drawings.

The second problem caused by closed operation in the manner depicted in Figure 3 is that the chloride content of the filter cake may be unacceptably high. If, for example, by-product gypsum is being produced for wall board manufacture, the maximum allowable chloride content is usually less than about 400 ppm. In a closed operation mode, this specification could not be achieved without washing the filter cake with fresh water. Thus, the only viable exit for chlorides, i.e. with the filter cake, is eliminated. The only means for controlling chlorides (short of return to open cycle operation) is to include a "managed" bleed stream in which the soluble impurities are dealt with in such a manner that these impurities are somehow solidified and are not directly discharged as liquid wastes. Conventional means for doing this would be desalination technology, such as conventional salt crystallizers or semi-permeable membranes. No one has yet designed or operated a wet scrubbing process requiring "management" of this bleed stream.

A scrubbing apparatus for removing SO₂ from industrial waste gases is disclosed in Patent Specification US-A-3,985,860 to Mandelik et al. A process for treating combustion gases including a scrubber and thickener is also disclosed in Patent Specification US-A-4,150,096 to Nelms et al.

The spraying of some slurry back into a fly ash collector is disclosed by Patent Specification US-A-4,228,139 to Johnson, while Patent Specification US-A-3,880,629 to Dublin et al discloses that sludge may be fed back to the input of a baghouse in a glass manufacturing process. An open cycle scrubbing process is disclosed in Patent Specification US-A-4,231,995 to Campbell et al.

Patent Specification EP-A-0 244 346 discloses a method of scrubbing flue gases wherein the flue gases are supplied to a dust collector, dustfree gases are supplied to an absorber where compounds of the gas are absorbed into a slurry by spraying the gas with a scrubbing slurry to produce a product slurry, part of the product slurry is fed to a dehydrating machine to produce a filtrate to which a modifier is added before it is sprayed into the original high temperature flue gas line upstream of the dust collector to form any solids which are collected in the dust collector.

Patent Specification EP-A 263317 discloses the possibility of including a prescrubber and mentions the desirability of preventing chlorides being carried over into an absorbtion stage. In a prescrubber sump, in which sulphites are oxidised to sulphates, a pH of between 4 and 5 is maintained.

According to the invention there is provided a method of scrubbing flue gases, comprising in particular SO₂, produced by a fossil fuel fired plant, comprising the steps of
(a) supplying the flue gases through a flue gas line (10) to a dust collector (12) to remove dust from the flue gases, dust free gases being thereby produced,
(b) supplying the dust free gases to a prescrubber (34) to scrub HCl with a slurry, the prescrubber being operated at a pH of between 4.0 and 4.5, significant SO₂ absorption being thereby prevented, some of the prescrubber slurry being recycled to an input of the prescrubber and some of the prescrubbuer slurry which is rich in chlorides being supplied through a bleed line (36) to the flue gas line and sprayed into the flue gases in the flue gas line upstream of the dust collector, the sprayed slurry being dried and precipitated as particles in the dust collector, the flue gas temperature drop caused by the spray being limited to less than about 11.1°C,
(c) supplying the dust free gases at the output of the prescrubber to an absorber (16) to scrub the gases with a slurry, some of the absorber slurry being recycled to an input of the absorber and some of the absorber slurry being supplied to a thickener (24) to thicken the slurry thereby obtaining a high solids content stream and a low solids content stream, the low solids content stream being returned to the absorber, the high solids content stream being supplied to a filter (28) from which a filter cake and an effluent stream are obtained, the effluent stream being returned to the thickener.

Thus a bleed stream from the wet scrubber is diverted to a position upstream of the dust collector and this aqueous stream is preferably injected into the flue gas as a finely atomised spray and evaporated to dryness. The evaporated droplets become dried particles which are easily captured by the dust collector. The particulate will usually comprise calcium and sodium chlorides and the dust collector will usually be an electrostatic precipitator (ESP) or baghouse. In order to avoid a negative impact upon the operation of the dust collector, the quantity of aqueous solution sprayed into the flue gas upstream of the dust collector must be minimised to prevent the flue gas from becoming too cool and damp. The temperature drop caused by the spray is limited to less than 11.1°C (20°F) by allowing the chloride content to build up to high concentrations while running in the closed loop mode without any bleed stream.

Thus, most of the chlorides are collected before they can reach the absorber.

The present invention can yield the following advantages over conventional lime/limestone wet scrubbing flue gas desulphurisation systems:
Closed loop operation can be achieved without the discharge of any aqueous bleed streams from the power plant.

Wall board quality gypsum specifications relating to soluble impurities can be achieved with minimal or no cake washing.

The invention can have advantages over conventional desalination technologies as follows:

The energy requirements for disposal of the bleed stream can be almost totally satisfied by waste heat from the boiler. A salt crystallizer, on the other hand, would require steam.

The capital equipment requirements can be very minor in comparison to desalination equipment. All that is needed is a series of spray nozzles and a source of compressed air for pneumatic atomisation. Only two to three atomisers per 100 MW of generating capacity would typically be required. In-duct humidification technology of the Babcock & Wilcox Company is well suited to this task.

No separate solid waste stream management is required because the solids become intermingled with the fly ash. Since the predominant constituent is calcium chloride, the mixing of these solids in no way influences the fly ash waste classification.

The invention is diagrammatically illustrated by way of example in the accompanying drawings, in which:
Figure 1 is a schematic representation of an open cycle flue gas scrubber of previously proposed kind;
Figure 2 is a graph showing the influence of sludge dewatering on steady state chloride levels in a closed cycle operation for scrubbing flue gases of previously proposed kind;
Figure 3 is a view similar to Figure 1 showing apparatus for effecting a closed cycle operation of previously proposed kind;
Figure 4 is a composite set of graphs illustrating the natural oxidation and coarse grind resulting from a closed cycle operation of previously proposed kind; and
Figure 5 is a view similar to Figure 1 showing apparatus according to the invention for effecting a wet scrubbing method.

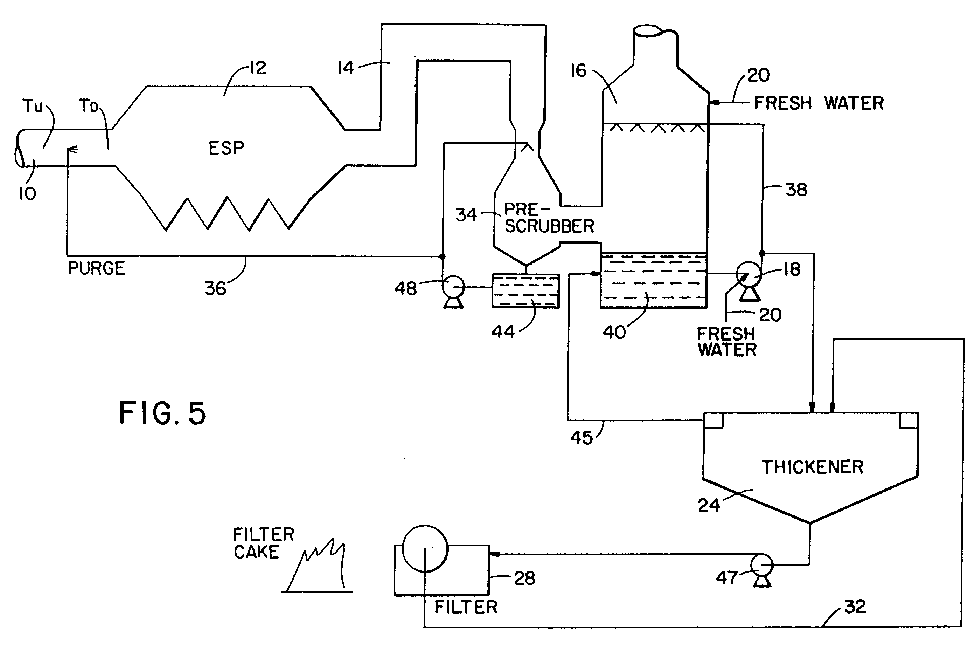

Referring to Figure 5, in wet scrubbing of flue gases of fossil fuel fired plant, the flue gases are supplied through a flue gas line 10 having an inlet temperature Tᵤ and an outlet temperatureT_{D}, to dust collector means such as an electrostatic precipitator (ESP) 12, a baghouse or other dust collecting equipment. The dust free gas is supplied through a line 14 to a prescrubber 34 which is supplied by a recycling pump 48 with aqueous scrubbing liquor from a sump 44 of the prescrubber 34. The aqueous scrubbing liquor is actually a slurry of water, calcium carbonate or hydroxide, calcium sulphite, calcium sulphate and a small amount of fly ash. The prescrubbed gas is thereafter supplied to a main absorber or scrubber 16 where the gas is sprayed with additional scrubbing liquor supplied by a pump 18 through a line 38.

As with the apparatus of Figures 1 and 3, where the same reference numerals were used to designate the same or similar parts as those in Figure 5, make-up fresh water is supplied through lines 20 to the absorber 16.

Some of the slurry from the sump 40 of the absorber 16 is supplied to a thickener 24 which separates a high solids content stream from a low solids content stream. The low solids content stream is returned through a line 45 to a sump 40 of the scrubber 16 while the high solids content stream is pumped by a pump 47 to a filter 28 where a filter cake is removed from the stream. The effluent of the stream is returned, through a line 32, to the thickener 24.

The temperature drop Tᵤ-T_{D} in the flue gas line is limited to about 11.1°C (20°F) to avoid the deleterious effects of a closed cycle system. The prescrubber 34 is operated at a pH of from 4.0 to 4.5 to prevent significant SO₂ absorption while still effectively scrubbing HCl.

In an example of the operation of the apparatus of Figure 5, a 500 MW plant produces flue gases with a 3% by weight sulphur content. Filter cake is 85% by weight solids with a coal chloride content of 800 ppm and a water chloride content of 100 ppm. The resulting recycled slurry has a chloride content of only 700 ppm with the dry gypsum chloride content being only 125 ppm. The purge stream flowed at 1.77 x 10.3 m³/s (28 GPM) and the temperature drop Tᵤ-T_{D} was 6.1°C (11°F).

## Claims

1. A method of scrubbing flue gases, comprising in particular SO₂, produced by a fossil fuel fired plant, comprising the steps of
(a) supplying the flue gases through a flue gas line (10) to a dust collector (12) to remove dust from the flue gases, dust free gases being thereby produced,
(b) supplying the dust free gases to a prescrubber (34) to scrub HCl with a slurry, the prescrubber being operated at a pH of between 4.0 and 4.5, significant SO₂ absorption being thereby prevented, some of the prescrubber slurry being recycled to an input of the prescrubber and some of the prescrubber slurry which is rich in chlorides being supplied through a bleed line (36) to the flue gas line and sprayed into the flue gases in the flue gas line upstream of the dust collector, the sprayed slurry being dried and precipitated as particles in the dust collector, the flue gas temperature drop caused by the spray being limited to less than about 11.1°C
(c) supplying the dust free gases at the output of the prescrubber to an absorber (16) to scrub the gases with a slurry, some of the absorber slurry being recycled to an input of the absorber and some of the absorber slurry being supplied to a thickener (24) to thicken the slurry thereby obtaining a high solids content stream and a low solids content stream, the low solids content stream being returned to the absorber, the high solids content stream being supplied to a filter (28) from which a filter cake and an effluent stream are obtained, the effluent stream being returned to the thickener.

2. A method according to Claim 1, wherein the dust collector (12) is an electrostatic precipitator.

## Patentansprüche

1. Verfahren zum Waschen von Rauchgasen, die insbesondere SO₂ umfassen und von einer mit einem fossilen Brennstoff befeuerten Anlage erzeugt wurden, mit den Stufen, in denen man
(a) die Rauchgase durch eine Rauchgasleitung (10) zu einem Staubsammler (12) führt, um Staub aus den Rauchgasen zu entfernen, wobei so staubfreie Gase erzeugt werden,
(b) die staubfreien Gase zu einem Vorwäscher (34) führt, um HCl mit einem Schlamm auszuwaschen, wobei der Vorwäscher bei einem pH-Wert zwischen 4,0 und 4,5 arbeitet, dabei wesentliche SO₂-Absorption verhindert, etwas von dem Vorwäscherschlamm zu einem Eingang des Vorwäschers zurückführt und etwas von dem Vorwäscherschlamm, welcher reich an Chloriden ist, durch eine Entnahmeleitung (36) zu der Rauchgasleitung überführt und in die Rauchgase in der Rauchgasleitung aufstromwärts von dem Staubsammler einsprüht, den versprühten Schlamm trocknet und als Teilchen in dem Staubsammler niederschlägt, den durch das Versprühen erzeugten Rauchgastemperaturabfall auf weniger als etwa 11,1°C begrenzt,
(c) die staubfreien Gase am Ausgang des Vorwäschers zu einem Absorber (16) überführt, um die Gase mit einem Schlamm zu waschen, etwas von dem Absorberschlamm zu einem Eingang des Absorbers zurückführt und etwas von dem Absorberschlamm zu einem Eindicker (24) überführt, um den Schlamm einzudicken und dabei einen Strom mit hohem Feststoffgehalt und einen Strom mit niedrigem Feststoffgehalt zu bekommen, den Strom mit niedrigem Feststoffgehalt zu dem Absorber zurückführt, den Strom mit hohem Feststoffgehalt zu einem Filter (28) überführt, aus welchem ein Filterkuchen und ein Auslaufstrom erhalten werden, und den Auslaufstrom zu dem Eindicker zurückführt.

2. Verfahren nach Anspruch 1, bei dem der Staubsammler (12) ein elektrostatischer Abscheider ist.

## Revendications

1. Procédé d'épuration de gaz de combustion, Contenant en particulier du SO₂, produits par une installation chauffée par combustible fossile, comprenant les phases consistant à :
(a) acheminer les gaz de combustion va un conduit à gaz de combustion (10) jusqu'à un séparateur de poussières (12) pour extraire les poussières des gaz de combustion, des gaz de combustion exempts de poussières étant alors obtenus,
(b) acheminer les gaz de combustion exempts de poussières jusqu'à un pré-épurateur (34) pour épurer le HCl avec une bouillie, le pré-épurateur fonctionnant à un pH entre 4 et 4,5, une absorption importante de SO₂ étant ainsi évitée, une partie de la bouillie du pré-épurateur étant ramenée pour recyclage jusqu'à une entrée du pré-épurateur et une partie de la boule du pré-épurateur qui est riche en chlorures étant acheminée via un conduit de purge (36) jusqu'au conduit de gaz de combustion et pulvérisée dans les gaz de combustion dans le conduit de gaz de combustion en amont du séparateur de poussières, la boule pulvérisée étant séchée et précipitée en des particules dans le séparateur de poussières, la chute de température des gaz de combustion provoquée par la pulvérisation étant limitée à moins de 11,1°C environ,
(c) acheminer les gaz de combustion exempts de poussières à la sortie du pré-épurateur jusqu'à un absorbeur (16) pour épurer les gaz avec une bouillie, une partie de la bouillie de l'absorbeur étant ramenée pour recyclage jusqu'à une entrée de l'absorbeur et une partie de la bouillie de l'absorbeur étant acheminée jusqu'à un épaississeur (24) pour épaissir la boule de sorte à obtenir un flux à forte teneur en solides et un flux à faible teneur en solides, le flux à faible teneur en solides étant ramené jusqu'à l'absorbeur, le flux à forte teneur en solides étant acheminé jusqu'à un filtre (28) d'où un gâteau de filtre et un flux résiduaire sont obtenus, le flux résiduaire étant ramené jusqu'à l'épaississeur.

2. Procédé selon la revendication 1, dans lequel le séparateur de poussières (12) est un précipitateur électrostatique.
